# EUROPEAN PATENT SPECIFICATION

(11) **EP 3 481 785 B1**
(45) Date of publication and mention of the grant of the patent: **11.03.2020**
(21) Application number: 17734106.2
(22) Date of filing: 04.07.2017
(51) Int. Cl.: C03B 35/18, C03B 40/00, F27B 9/24, F27D 3/02

(54) **HIGH TEMPERATURE RESISTANT SLEEVE FOR ROLLER COVERING**
HOCHTEMPERATURBESTÄNDIGE HÜLSE FÜR WALZENBEZUG
MANCHON RÉSISTANT À HAUTE TEMPÉRATURE POUR REVÊTEMENT DE CYLINDRE

(30) Priority: 06.07.2016 EP 16178166
(43) Date of publication of application: 15.05.2019
(73) Proprietor: NV Bekaert SA, 8550 Zwevegem (BE)
(72) Inventor: DE RIDDER, Frank, 9308 Hofstade - Aalst (BE); TRIKI, Radhouane, 7520 Templeuve (BE)
(74) Representative: Zhang, Li
(86) International application number: PCT/EP2017/066536
(87) International publication number: WO 2018/007339

(56) References cited:
- EP-A2- 0 477 785
- US-A- 3 148 968
- US-A- 5 565 013

## Description

### Technical Field

The invention relates to high temperature resistant knitted sleeves for roller coverings, more particularly for covering bending rollers out of metal used in production lines for roller bending of glass panels for automotive applications.

### Background Art

Several types of heat resistant textile products are known for covering tooling in hot glass processing for automotive applications. Although there are some general requirements such as temperature resistance and corrosion resistance, specific requirements exist for specific types of processes and for specific types of tooling.

Heat resistant sleeves for covering conveyor rollers - typically the conveyor rollers are made out of ceramic material - in automotive glass processing are known. US5565013 describes a tubular weft knitted fabric comprising stainless steel fiber yarns for covering conveyor rollers.

WO2011/117048A1 discloses a sleeve for covering rollers for conveying glass panels in a heating system. The sleeve is a fabric comprising yarns which comprise both glass fibers or ceramic fibers and metal fibers. The sleeve is especially suited as cover on the ceramic rollers of a roller conveyor inside the heating furnace.

It is well known to use molds covered with a heat resistant textile material to bend or form a hot glass panel discontinuously into shape. An alternative technology for shaping automotive glass products uses a series of rotating metal bending rollers over which the glass panel runs during which it is bent. WO2005/047198 and WO2008/155456 show examples of such production lines. The bending rollers require sleeves as covering material to prevent direct contact between the bending rollers and the glass sheet. In the bending process on rollers, the glass sheet exerts higher forces on the sleeves covering the rollers than on mold coverings in other bending techniques.

### Disclosure of Invention

It is an objective of the invention to provide an improved sleeve for use as cover for metal bending rollers used in roller bending of hot glass panels in automotive glass production.

A first aspect of the invention is a knitted heat resistant sleeve for covering rollers in glass processing. The knitted sleeve comprises knitted stitches. The knitted stitches are plated stitches. The plated stitches comprise at least two first yarns and at least one second yarn. The outer surface of the sleeve is at least predominantly provided or is provided by the at least two first yarns. The inner surface of the sleeve is predominantly provided or is provided by the at least one second yarn. With "predominantly provided by" is meant that at least half of the surface is provided by that yarn or yarns.

Plating (and a plated stich) refers to knitting with two strands of yarn that are held in such a way that one strand of yarn is positioned in front of the other. This is accomplished - as is known in the art of knitting - by feeding the yarns at different angles to the needles and with different tension. In the same way, more yarns or more stands can be used in plating.

The inventive knitted heat resistant sleeve surprisingly performs excellent as cover of metal bending rollers in automotive glass processing. The construction of the sleeve ensures optimum quality of the processed glass panel, thanks to the combination of the cushioning effect provided by the second yarns or second yarns and the fine surface structure of the outer surface of the sleeve thanks to the use of at least two first yarns.

In a preferred embodiment, in the plated stiches the number of first yarns is two.

In a preferred embodiment, the plated stitches comprise only one second yarn.

In a preferred embodiment, the at least two first yarns are all the same in yarn count and in fiber composition.

In a preferred embodiment, the at least two first yarns differ in fiber composition. As an example, one of the first yarns can comprise stainless steel fibers or be a stainless steel fiber yarn and another one of the first yarns can comprise PBO-fibers or be a PBO-yarn. With PBO is meant poly(p-phenylene-2,6-benzobisoxazole).

In a preferred embodiment, the second yarn or second yarns comprise or consist out of glass fibers. Preferably multifilament glass fibers are used; and more preferably twisted multifilament glass fibers. Preferred is the use of E-glass or S-glass for the glass fibers. The use of glass fibers in the second yarn or second yarns provides synergistic benefits. The glass fibers will ensure that the sleeve sits firmly around the roller, also during long term high temperature use. It prevents local damage to the rollers, local damage which would cause local defects to the processed glass panel. Furthermore, the use of glass fibers creates an effective insulation between the hot glass panel and the metal roller, such that the hot glass panel does not cool down too fast. If the glass panel would cool down too fast, it could lead to quality defects in or even breakage of the glass panel during bending.

In a preferred embodiment, the second yarn or second yarns comprise or consist out of synthetic fibers, e.g. PBO-fibers. PBO is the abbreviation of poly(p-phenylene-2,6-benzobisoxazole) fiber. Such embodiments have the benefit that during a longer time period high quality glass products can be produced with the sleeve, as the sleeve is less prone to damage - because it better resists the high forces, and therefore less sleeve defects occur that could cause quality defects in the glass product will originate.

Preferably, the at least two first yarns comprise or consist out of synthetic fibers, e.g. PBO-fibers - PBO is the abbreviation of poly(p-phenylene-2,6-benzobisoxazole) fiber. Such embodiments provide synergistic benefits for the quality of the processed glass panel, as an even softer outer sleeve surface is provided, by strong yarns. An example of such embodiment is where the second yarn or second yarns comprise of consist out of glass fibers and the first yarns comprise or consist out of PBO-fibers; resulting in a further reduced risk of markings in the bent glass panel.

In a preferred embodiment, at least one of the at least two first yarns comprise or consist out of metal fibers.

Preferred metal fibers are stainless steel fibers, e.g. austenitic stainless steel fibers. In a further preferred embodiment, at least one of the first yarns is a 100% stainless steel fiber yarn; even more preferred is when all the first yarns are 100% stainless steel fiber yarns. Austenitic fibers out of alloys such as AISI 316 or AISI 316L, AISI 347, or other alloys out of the AISI 300 type can be used.

Other preferred metal fibers are metal fibers out of a NiCr alloy or out of a NiCrFe alloy. The NiCr or NiCrFe alloy comprises at least 40% by weight of nickel and at least 14% by weight of chromium. With a NiCr alloy comprising at least 40% by weight of nickel and at least 14% by weight of chromium, is meant an alloy that comprises at least 40% by weight of nickel and at least 14% by weight of chromium. With a NiCrFe alloy comprising at least 40% by weight of nickel and at least 14% by weight of chromium, is meant an alloy that comprises at least 40% by weight of nickel, at least 14% by weight of chromium and also iron, preferably at least 5% by weight of iron, more preferably at least 10% by weight of iron. An example of a suitable alloy is UNS N06601, and/or its equivalent designation 2.4851 according EN10088-1:2005. This alloy has nickel content between 58 and 63 % by weight and chromium content between 21.0 and 25.0 % by weight. Another example of a suitable alloy for the metal fibers comprises more than 50 % by weight of nickel (e.g. between 50 and 57 % by weight, e.g. between 53 and 56 % by weight), about 23 % by weight of chromium, about 16 % by weight of molybdenum, at maximum 3% by weight of iron, about 1.6 % by weight of copper, at maximum 0.08 % by weight of silicon and at maximum 0.01 % by weight of carbon. An example of this alloy is commercially available as Hastelloy C2000.

Other preferred metal fibers are metal fibers out of an iron-chromium-aluminum alloy, more preferably the alloy has a Cr content of more than 15 percent by weight, a minimum content of Fe of 70 percent by weight and a minimum content of AI of 2 percent by weight.

Examples of first yarns comprising metal fibers that can be used in the invention have e.g. a metric count 15/2 Nm (65^{∗}2 tex), 11/2 Nm (90^{∗}2 tex), 9/2 Nm (110^{∗}2 tex) or 8/2 Nm (125^{∗}2 tex).

Embodiments in which at least one of the at least two first yarns comprise or consist out of metal fibers provide a sleeve with enhanced temperature resistance; which therefore can be used at higher temperatures.

An example of the invention is a sleeve wherein the first yarns consist out of s metal fibers (e.g. stainless steel fibers) and the second yarn or second yarns consist out of glass fibers. Such sleeve can advantageously be used on the first bending rollers, which are at highest temperature. The high temperature resistance of the first yarns, combined with the thermal insulating effect of the second yarns, results in long useful life of the sleeve without markings on the glass panel, even if the glass panel is at high temperature when it contacts the sleeve covering a metal roller.

An example of the invention is a sleeve wherein the first yarns comprise or consist out of a mixture of stainless steel fibers and PBO-fibers and the second yarn or second yarns consist out of glass fibers. Such sleeves, when used as covering on metal rollers in zones on the processing line where the hot glass temperature is e.g. 580°C, provides excellent quality of the glass as the sleeve prevents the formation of markings or breakage of the glass panel, thanks to the thermally insulating effect of the second yarns out of glass fibers, combined with the soft and fine structure of the outer surface of the sleeve.

An example of the invention is a sleeve wherein the first yarns comprise stainless steel fibers and para-aramid fibers (preferably in an intimate blend) and the second yarns consist out of glass fibers. Such sleeves are especially useful as cover on metal bending rollers in zones of the production line where the temperature of the hot glass is below 450 °C, in order to produce bent glass panels of high quality. Such sleeves are particularly useful as they prevent breakage of the glass panel, and the sleeves make it possible to bend thicker glass panels.

An example of the invention is a sleeve wherein the first yarns consist out of stainless steel fibers and the second yarn or second yarns consist out of PBO-fibers. Such sleeves are particularly suited for use as cover on metal bending rollers in zones of the processing line where the temperature of the hot panel is less than 450 °C. Such sleeves avoid marking on the glass panel during a long lifetime of the sleeve.

In a preferred embodiment, at least one - and preferably all - of the at least two first yarns comprise metal fibers and comprise para-aramid fibers. Examples of para-aramid fibers are marketed under the trademarks Kevlar and Twaron. Preferably, the metal fibers (e.g. stainless steel fibers) and the para-aramid fibers are combined as an intimate blend in spun yarns. As an example, such yarn can consist out of an intimate blend of 30% by weight of para-aramid fibers and 70% by weight of stainless steel fibers.

In a preferred embodiment, the sleeve is a weft knitted sleeve, preferably a single bed weft knitted sleeve; more preferably having a single jersey knitting structure.

In weft knitting, the yarns run crosswise in the fabric making all of the loops in one course. In circular weft knitting, the yarns run continuously around the tubular fabric. As in circular weft knitting, there are several knitting positions each making stitches with separate yarns, there are courses made by other yarns in between courses made by a same yarn. When plated stitches are made, several yarns are making a stitch at each individual knitting position.

Preferred sleeves are knitted with a gauge between 4 and 8.5 (which is the number of needles per inch).

Preferred sleeves have between 4.5 and 8 courses per cm.

Preferred sleeves have a diameter between 20 mm and 100 mm; e.g. 20 mm, 25 mm ,27 mm, 30 mm, 40 mm, 45 mm, 50 mm, 55 mm, 60 mm, 80 mm and 100 mm. With the diameter of the sleeve is meant the diameter in relaxed (meaning untensioned) condition of the sleeve.

In a preferred weft knitted sleeve, the outer surface of the sleeve comprises the technical front of the stitches. The technical front of the stitches is the side showing the legs of the stitches. Such embodiments provide further beneficial results, as the use of such sleeves results in glass panels of good quality over a longer period of time, as the outer surface of the sleeve will maintain its functionality longer.

In a preferred weft knitted sleeve, the inner surface of the sleeve comprises the technical back of the stitches. The technical back of the stitches is the side showing the heads and feet of the stitches.

A second aspect of the invention is a roller, preferably a metal roller. The roller is covered by a knitted heat resistant sleeve as in any embodiment of the first aspect of the invention. Preferably the inner surface of the sleeve contacts the roller. In a preferred embodiment, the inner surface of the sleeve contacts the metal surface of a metal roller.

A third aspect of the invention is a method for bending a hot glass panel on a production line. The production line comprises a plurality of rotating rollers - preferably metal rollers - for bending the hot glass panel. The metal rollers are covered by a sleeve as in any of the embodiments of the first aspect of the invention. The hot glass panel is conveyed over the plurality of rotating metal rollers thereby bending the hot glass panel into shape; wherein the outer surface of the sleeve makes contact with the hot glass panel.

### Brief Description of Figures in the Drawings

Figure 1 shows a metal roller covered by a knitted heat resistant sleeve as in the invention.
Figure 2 shows the outer surface of a sleeve according to the invention.
Figure 3 shows the inner surface of the sleeve of figure 2.
Figure 4 shows an example of a cross section at a position of a sleeve according to the invention.

### Mode(s) for Carrying Out the Invention

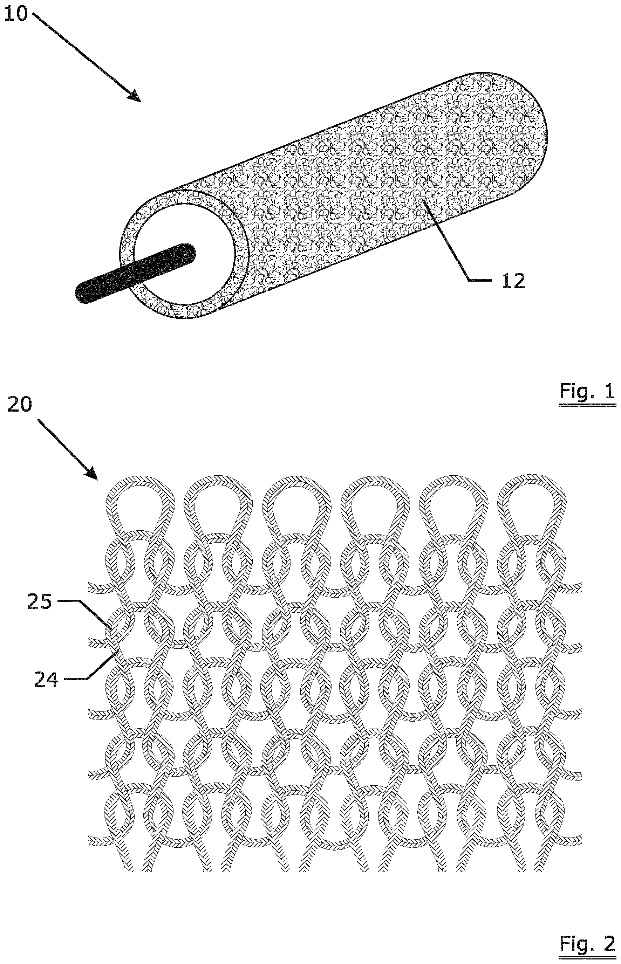

Figure 1 shows a metal roller 10 as in the second aspect of the invention. The metal roller 10 is covered by a knitted heat resistant sleeve 12 according to the first aspect of the invention. The inner surface of the knitted heat resistant sleeve 12 contacts the metal surface of the metal roller.

Figure 2 shows the outer surface 20 of a sleeve according to the invention. The sleeve is a single bed circular weft knitted sleeve, in single jersey knitting structure. The outer surface of the sleeve comprises the technical front of the stitches. The knitted stitches in the sleeve are plated stitches. The plated stitches consist out of two first yarns 24, 25 and one second yarn (which is not visible in figure 2 as it is hidden under the first yarns). The outer surface of the sleeve is provided by the two first yarns 24, 25.

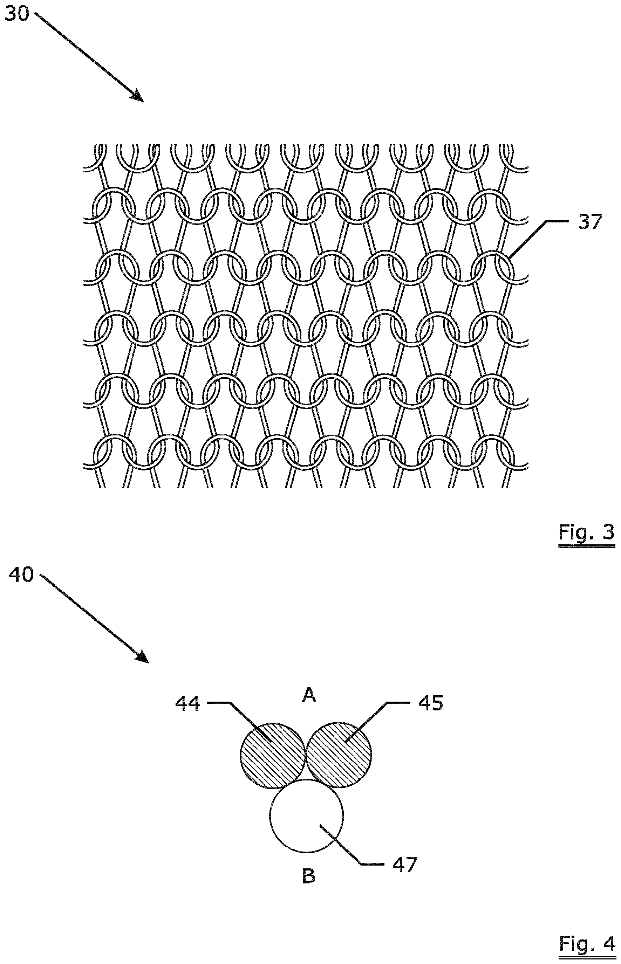

Figure 3 shows an example 30 of the inner surface of the sleeve of figure 2. The inner surface of the sleeve comprises the technical back of the stitches. The inner surface of the sleeve is provided by the second yarn 37. The two first yarns are not visible in figure 3 because they are underneath / hidden by the second yarn 37.

Figure 4 shows an example of a cross section 40 at a position of a sleeve according to the invention. A indicates the side of the outer surface of the sleeve; B indicates the side of the inner surface of the sleeve. The two first yarns 44, 45 provide the outer surface of the sleeve, whereas the second yarn 47 provides the inner surface of the sleeve.

Exemplary sleeves have been made with a diameter 30 mm, on an 8 gauge (8 needles per inch) circular weft kitting machine, with single-jersey structure. The samples have been produced with 6.5 courses per centimetre.

A sleeve was made with in the plated stitches two first yarns 11/2 Nm (90^{∗}2 tex) spun stainless steel fiber yarns and one 34/2 Nm (30^{∗}2 tex) spun PBO yarn as second yarn. This example comprises two first yarns; however, more than two first yarns can be used. In the example, the first yarns in the sleeve are identical, however, this is not necessary for the invention; the first yarns in the sleeve can differ in fiber composition.

An exemplary sleeve comprises in the plated stitches two first yarns 34/2 Nm (30^{∗}2 tex) spun PBO yarn and two second yarns 22^{∗}2 tex E-glass multifilament yarn.

Another exemplary sleeve comprises in the plated stitches two first yarns of which one 34/2 Nm (30^{∗}2 tex) spun PBO yarn and one 18/2 Nm (55^{∗}2 tex) spun stainless steel fiber yarn; and two second yarns 22^{∗}2 tex E-glass twisted multifilament yarns.

Another exemplary sleeves comprises in the plated stitches two (or more than two) blended para-aramid/PBO (30% by weight para-aramid fibers and 70% by weight PBO fibers) spun yarns as first yarns; and as second yarns two 22^{∗}2 tex E-glass twisted multifilament yarns.

Another exemplary sleeves comprises in the plated stitches two first yarns 11/2 Nm (90^{∗}2 tex) spun stainless steel fiber yarns and two second yarns 22^{∗}2 tex E-glass multifilament yarns. Instead of the stainless steel fibers yarns, yarns spun from fibers out of a NiCr alloy, or out of a NiCrFe alloy, or out of an iron-chromium-aluminum alloy can be used.

## Claims

1. A knitted heat resistant sleeve (12) for covering rollers (10) in glass processing;
**characterized in that** the knitted sleeve comprises knitted stitches;
wherein the knitted stitches are plated stitches;
wherein the plated stitches comprise at least two first yarns (24, 25, 44, 45) and at least one second yarn (37, 47);
wherein the outer surface (20) of the sleeve is at least predominantly provided or is provided by the at least two first yarns (24, 25, 44, 45);
and wherein the inner surface (30) of the sleeve is predominantly provided or is provided by the at least one second yarn (37, 47.

2. Sleeve as in claim 1, wherein in the plated stiches the number of first yarns (24, 25, 44, 45) is two.

3. Sleeve as in any of the preceding claims, wherein the plated stitches comprise only one second yarn (37, 47).

4. Sleeve as in any of the claims 1 - 3, wherein the at least two first yarns (24, 25, 44, 45) are all the same in yarn count and in fiber composition.

5. Sleeve as in any of the claims 1 - 3, wherein the at least two first yarns differ in fiber composition.

6. Sleeve as in any of the claims 1 - 5, wherein the second yarn or second yarns comprise or consist out of glass fibers, preferably multifilament glass fibers; and more preferably twisted multifilament glass fibers.

7. Sleeve as in any of the preceding claims, wherein the second yarn or second yarns comprise or consist out of synthetic fibers, e.g. PBO-fibers.

8. Sleeve as in any of the preceding claims, wherein the at least two first yarns comprise or consist out of synthetic fibers, e.g. PBO-fibers.

9. Sleeve as in any of the preceding claims, wherein at least one of the at least two first yarns comprise or consist out of metal fibers, preferably stainless steel fibers or fibers out of a NiCr alloy, or fibers out of a NiCrFe alloy, or fibers out of an iron-chromium-aluminum alloy.

10. Sleeve as in any of the preceding claims, wherein at least one of the first yarns comprises para-aramid fibers.

11. Sleeve as in any of the previous claims, wherein the sleeve is a weft knitted sleeve, preferably a single bed weft knitted sleeve.

12. Sleeve as in claim 11, wherein the outer surface (20) of the sleeve comprises the technical front of the stitches.

13. Sleeve as in any of the claims 11 or 12, wherein the inner surface (30) of the sleeve comprises the technical back of the stitches.

14. A roller (10); preferably a metal roller; wherein the metal roller is covered by a knitted heat resistant sleeve (12) as in any of the preceding claims, preferably wherein the inner surface of the sleeve contacts the metal roller.

15. Method for bending a hot glass panel on a production line;
wherein the production line comprises a plurality of rotating rollers (10) - preferably metal rollers - for bending the hot glass panel;
wherein the metal rollers are covered by a sleeve (12) as in any of the claims 1 to 13; wherein the hot glass panel is conveyed over the plurality of rotating metal rollers thereby bending the hot glass panel into shape; wherein the outer surface of the sleeve comes in contact with the hot glass panel.

## Patentansprüche

1. Gestrickte hitzebeständige Hülse (12) zum Bedecken von Walzen (10) bei der Glasverarbeitung;
**dadurch gekennzeichnet, dass** die gestrickte Hülse gestrickte Maschen umfasst;
wobei die gestrickten Maschen plattierte Maschen sind;
wobei die plattierten Maschen mindestens zwei erste Garne (24, 25, 44, 45) und mindestens ein zweites Garn (37, 47) umfassen;
wobei die Außenfläche (20) der Hülse durch die mindestens zwei ersten Garne (24, 25, 44, 45) mindestens vorwiegend bereitgestellt oder bereitgestellt wird;
und wobei die Innenfläche (30) der Hülse durch das mindestens eine zweite Garn (37, 47) vorwiegend bereitgestellt oder bereitgestellt wird.

2. Hülse nach Anspruch 1, wobei die Anzahl der ersten Garne (24, 25, 44, 45) in den plattierten Maschen zwei beträgt.

3. Hülse nach einem der vorhergehenden Ansprüche, wobei die plattierten Maschen nur ein zweites Garn (37, 47) umfassen.

4. Hülse nach einem der Ansprüche 1 bis 3, wobei die mindestens zwei ersten Garne (24, 25, 44, 45) hinsichtlich der Garnzahl und der Faserzusammensetzung alle gleich sind.

5. Hülse nach einem der Ansprüche 1 bis 3, wobei sich die mindestens zwei ersten Garne in der Faserzusammensetzung unterscheiden.

6. Hülse nach einem der Ansprüche 1 bis 5, wobei das zweite Garn oder die zweiten Garne Glasfasern, vorzugsweise Multifilamentglasfasern und bevorzugter verdrillte Multifilamentglasfasern umfassen oder daraus bestehen.

7. Hülse nach einem der vorhergehenden Ansprüche, wobei das zweite Garn oder die zweiten Garne synthetische Fasern, z. B. PBO-Fasern, umfassen oder daraus bestehen.

8. Hülse nach einem der vorhergehenden Ansprüche, wobei die mindestens zwei ersten Garne synthetische Fasern, z. B. PBO-Fasern, umfassen oder daraus bestehen.

9. Hülse nach einem der vorhergehenden Ansprüche, wobei mindestens eines der mindestens zwei ersten Garne Metallfasern, vorzugsweise Fasern aus rostfreiem Stahl oder Fasern aus einer NiCr-Legierung oder Fasern aus einer NiCrFe-Legierung oder Fasern aus einer Eisen-Chrom-Aluminium-Legierung umfassen oder daraus bestehen.

10. Hülse nach einem der vorhergehenden Ansprüche, wobei mindestens eines der ersten Garne para-Aramidfasern umfasst.

11. Hülse nach einem der vorhergehenden Ansprüche, wobei die Manschette eine Kulierwarenhülse, vorzugsweise eine einbettige Kulierwarenhülse ist.

12. Hülse nach Anspruch 11, wobei die Außenfläche (20) der Hülse die technische Vorderseite der Maschen umfasst.

13. Hülse nach Anspruch 11 oder 12, wobei die Innenfläche (30) der Hülse die technische Rückseite der Maschen umfasst.

14. Walze (10), vorzugsweise eine Metallwalze, wobei die Metallwalze mit einer gestrickten hitzebeständigen Hülse (12) gemäß einem der vorhergehenden Ansprüche bedeckt ist, wobei vorzugsweise die Innenfläche der Hülse in Kontakt mit der Metallwalze ist.

15. Verfahren zum Biegen einer heißen Glasplatte auf einer Produktionsstraße;
wobei die Produktionsstraße eine Vielzahl von rotierenden Walzen (10), vorzugsweise Metallwalzen, umfasst, um die heiße Glasplatte zu biegen;
wobei die Metallwalzen durch eine Hülse (12) gemäß einem der Ansprüche 1 bis 13 bedeckt sind;
wobei die heiße Glasplatte über die Vielzahl der rotierenden Metallwalzen gefördert wird, wodurch die heiße Glasplatte in Form gebogen wird;
wobei die Außenfläche der Hülse in Kontakt mit der heißen Glasplatte kommt.

## Revendications

1. Manchon tricoté résistant à la chaleur (12) pour recouvrir des rouleaux (10) dans le traitement du verre ;
**caractérisé en ce que** le manchon tricoté comprend des mailles tricotées ;
les mailles tricotées étant des mailles plaquées ; les mailles plaquées comprenant au moins deux premiers fils (24, 25, 44, 45) et au moins un second fil (37, 47) ;
la surface externe (20) du manchon étant au moins de manière prédominante fournie ou étant fournie par les au moins deux premiers fils (24, 25, 44, 45) ;
et la surface interne (30) du manchon étant de manière prédominante fournie ou étant fournie par l'au moins un second fil (37, 47).

2. Manchon selon la revendication 1, dans les mailles plaquées, le nombre de premiers fils (24, 25, 44, 45) étant de deux.

3. Manchon selon l'une quelconque des revendications précédentes, les mailles plaquées comprenant seulement un second fil (37, 47).

4. Manchon selon l'une quelconque des revendications 1 à 3, les au moins deux premiers fils (24, 25, 44, 45) étant tous identiques en nombre de fils et en composition de fibres.

5. Manchon selon l'une quelconque des revendications 1 à 3, les au moins deux premiers fils différant en composition de fibres.

6. Manchon selon l'une quelconque des revendications 1 à 5, le second fil ou les seconds fils comprenant ou étant constitués de fibres de verre, de préférence de fibres de verre multifilaments ; et plus préférablement de fibres de verre multifilaments torsadées.

7. Manchon selon l'une quelconque des revendications précédentes, le second fil ou les seconds fils comprenant ou étant constitués de fibres synthétiques, par exemple de fibres PBO.

8. Manchon selon l'une quelconque des revendications précédentes, les au moins deux premiers fils comprenant ou étant constitués de fibres synthétiques, par exemple de fibres PBO.

9. Manchon selon l'une quelconque des revendications précédentes, au moins un des au moins deux premiers fils comprenant ou étant constitué de fibres métalliques, de préférence de fibres d'acier inoxydable ou de fibres d'un alliage NiCr, ou de fibres d'un alliage NiCrFe, ou de fibres d'un alliage fer-chrome-aluminium.

10. Manchon selon l'une quelconque des revendications précédentes, au moins l'un des premiers fils comprenant des fibres de para-aramide.

11. Manchon selon l'une quelconque des revendications précédentes, le manchon étant un manchon tricoté en trame, de préférence un manchon tricoté en trame à une fonture simple.

12. Manchon selon la revendication 11, la surface externe (20) du manchon comprenant l'avant technique des mailles.

13. Manchon selon l'une quelconque des revendications 11 ou 12, la surface interne (30) du manchon comprenant l'arrière technique des mailles.

14. Rouleau (10), de préférence rouleau métallique, le rouleau métallique étant couvert par un manchon tricoté résistant à la chaleur (12) selon l'une quelconque des revendications précédentes, de préférence la surface interne du manchon étant en contact avec le rouleau métallique.

15. Procédé de bombage d'un panneau de verre chaud sur une ligne de production ;
la ligne de production comprenant une pluralité de rouleaux rotatifs (10), de préférence des rouleaux métalliques, pour le bombage du panneau de verre chaud ;
les rouleaux métalliques étant recouverts par un manchon (12) selon l'une quelconque des revendications 1 à 13 ;
le panneau de verre chaud étant transporté sur la pluralité de rouleaux métalliques rotatifs, ce qui permet de bomber le panneau de verre chaud en forme ; la surface externe du manchon venant en contact avec le panneau de verre chaud.
